# EUROPÄISCHE PATENTANMELDUNG

(11) **EP 4 643 640 A1**
(43) Veröffentlichungstag der Anmeldung: **05.11.2025**
(21) Anmeldenummer: 24173576.0
(22) Anmeldetag: 30.04.2024
(51) Int. Cl.: A01K 27/00

(54) **VERSTELLVORRICHTUNG FÜR EINE HAUSTIERLEINE, HAUSTIERLEINE SOWIE LEINENFÜHRUNGSSET**

(71) Anmelder: Curli AG, 6331 Hünenberg (CH)
(72) Erfinder: Primus, Roland, 7078 Lenzerheide (CH)
(74) Vertreter: Wenzel Nemetzade Warthmüller Patentanwälte Part mbB

(57) **Zusammenfassung**

Verstellvorrichtung (1) für eine Haustierleine (20), insbesondere zur variablen Längenverstellung einer Haustierleine (20), aufweisend einen Verstellvorrichtungskörper (2) mit einer ersten und einer zweiten Durchführung (3, 4) zur Erzeugung einer Reibkraft auf eine Leine (21) und einen mit dem Verstellvorrichtungskörper (2) gekoppelten Ösenkörper (5), der eine dritte Durchführung (6) zur Befestigung eines Endes (X2) einer Leine (21) aufweist, wobei der Ösenkörper (5) relativ zum Verstellvorrichtungskörper (2) drehbar angeordnet ist.

## Beschreibung

Die Erfindung betrifft eine Verstellvorrichtung für eine Haustierleine, eine Haustierleine sowie ein Leinenführungsset für ein Haustier.

Aus dem Stand der Technik sind Haustierleinen bekannt, bei welchem an einem ersten Ende einer Leine ein Tier befestigbar ist und bei welchem an einem zweiten Ende der Leine ein Tierhalter die Haustierleine greift.

Während am ersten Ende eine Befestigungseinrichtung zur Befestigung an einem Geschirr oder einem Halsband angeordnet ist, kann am zweiten Ende die Leine als Schlaufe ausgebildet sein. Die Schlaufe ermöglicht das Greifen oder das Umschlingen eines Handgelenks oder auch das derartige Umlegen der Haustierleine, dass diese um den Hals und unter der Achsel eines Nutzers beziehungsweise eines Haustierhalters verlaufen kann.

Nun ist es bei variabel verstellbaren Haustierleinen bekannt, dass sich deren Leinen um ihre Längserstreckung verdrehen beziehungsweise verdrallen können. So kann durch das Hindurchführen beziehungsweise Entlanggleiten der Leine durch eine Verstellvorrichtung zur Längenverstellung der Leine ein verdrehter Leinenabschnitt erzeugt werden. Das Verdrehen beziehungsweise Verdrehen entsteht dabei durch das Entlanggleiten der Leine an den Oberflächen einer Verstellvorrichtung. Dies kann sich insbesondere aufgrund der Webung der jeweiligen Leine ergeben, welche die Außenform der Leine bildet, sowie der in der Praxis häufig aufkommenden und von einem Nutzer erzeugten Bewegungsmechanik. So erfolgt eine manuelle Relativbewegung der Leine entlang einer Oberfläche der jeweiligen Verstellvorrichtung im alltäglichen Gebrauch nur selten in linearer Weise. Bedingt durch die Webung oder gewebte Struktur an der Außenform der Leine sowie bedingt durch eine von einem Nutzer erzeugte nicht-lineare Bewegung der Leine entlang einer Oberfläche der Verstellvorrichtung kann sich mithin ein Verdrehen oder ein Verdrallen der Leine um Ihre Längserstreckung ergeben. Dies kann einen verdrehten oder verdrahten Abschnitt der jeweiligen Leine verursachen.

Ein verdrehter oder verdrehter Abschnitt der Leine kann dabei insbesondere zur Schlaufe gelangen und ist für den Nutzer der jeweiligen Haustierleinen störend, da eine verdrehte oder verdrehte Leine die Handhabung nennenswert erschwert.

Vor diesem Hintergrund ist es Aufgabe der vorliegenden Erfindung, eine Verstellvorrichtung für eine Haustierleine, eine Haustierleine und ein Leinenführungsset anzugeben, welche eine verbesserte Handhabung für einen Nutzer ermöglicht beziehungsweise ermöglichen.

In Bezug auf die Verstellvorrichtung wird diese Aufgabe durch die Merkmale des Patentanspruchs 1 gelöst. Eine Haustierleine ist Gegenstand von Anspruch 11 und ein Leinenführungsset ist Gegenstand von Anspruch 15. Weitere vorteilhafte Weiterbildungen sind Gegenstand der Unteransprüche.

Ein erster Aspekt der vorliegenden Erfindung betrifft eine Verstellvorrichtung für eine Haustierleine, insbesondere zur variablen Längenverstellung einer Haustierleine. Unter variablen Längenverstellung soll in diesem Zusammenhang verstanden werden, dass eine aktive oder wirksame Länge der jeweiligen Leine verstellbar sein kann oder verstellt werden kann. Bei der aktiven oder wirksamen Länge kann es sich um die Länge zwischen einer Griffstelle für einen Nutzer einerseits sowie dem jeweiligen Haustier oder einer haustierseitigen Befestigungsstelle andererseits handeln.

Genannte Verstellvorrichtung kann beispielsweise auch als Schnalle und/oder als Leinenklemme und/oder als Reibklemme bezeichnet oder verstanden werden.

Die Verstellvorrichtung nach dem ersten Aspekt weist einen Verstellvorrichtungskörper mit einer ersten und einer zweiten Durchführung zur Erzeugung einer Reibkraft auf eine Leine und einen mit dem Verstellvorrichtungskörper gekoppelten Ösenkörper auf.

Durch die beiden Durchführungen des Verstellvorrichtungskörpers kann eine Leine geführt werden, die insbesondere bei entsprechender Kraftbeaufschlagung durch Reibkraft in der Position relativ zum Verstellvorrichtungskörper fest angeordnet sein kann. Ebenso kann durch händisches Bewegen einer Leine durch die beiden Durchführungen eine Position der Leine relativ zum Verstellvorrichtungskörper verändert und damit eine Längenverstellung beziehungsweise Verstellung der funktional aktiv oder wirksamen Länge der jeweiligen Leine bewerkstelligt werden.

Erfindungsgemäß weist der Ösenkörper eine dritte Durchführung zur Befestigung eines Endes einer Leine auf, wobei der Ösenkörper relativ zum Verstellvorrichtungskörper drehbar angeordnet ist.

Auf diese Weise kann beispielsweise bei Anordnung eines Endes einer Leine an der dritten Durchführung eine Drehung von Leine und Ösenkörper relativ zum Verstellvorrichtungskörper gewährleistet werden, ohne dass sich die Leine bei einer weiteren Handhabung weiter verdreht. Somit wird die Handhabung der Verstellvorrichtung auf besonders vorteilhafte Weise vereinfacht.

Eine drehbare Anordnung des Ösenkörpers relativ zum Verstellvorrichtungskörper kann insbesondere durch eine rotatorische Lagerung bereitgestellt sein. Die drehbare Anordnung kann ferner frei von einem Anschlag in Drehrichtung beziehungsweise in Rotationsrichtung ausgebildet sein. Eine Drehbarkeit des Ösenkörpers relativ zum Verstellvorrichtungskörper kann mithin ohne Begrenzung in Drehrichtung beziehungsweise Rotationsrichtung vorgesehen sein.

Zudem kann der Ösenkörper eine Aufnahme für einen Bolzen aufweisen, um welchen der Ösenkörper drehbar ist. Diese Ausgestaltung ist nicht nur mit geringem Aufwand zu realisieren, sondern auch kostenarm in der Herstellung.

Auch kann der Verstellvorrichtungskörper an seinem zweiten Ende oder bei der zweiten Durchführung einen Bolzen aufweisen, um welchen der Ösenkörper drehbar ist. Ein Bolzen ist in der Herstellung einfach zu realisieren und verursacht bei der Herstellung nur geringe Kosten.

Ferner ist es möglich, dass das freikragende Ende des Bolzens einen Kopf mit seitlich überstehendem Kragen, insbesondere nach Art eines Nietkopfs, aufweist, welcher eine Trennung von Ösenkörper und Verstellvorrichtungskörper unterbindet.

Alternativ ist es möglich, dass am freikragenden Ende des Bolzens ein Sprengring, zum Beispiel in einer Nut des Bolzens, angeordnet ist, welcher den Ösenkörper am Verstellvorrichtungskörper halten kann.

Zudem ist es möglich, dass das freikragende Ende des Bolzens eine Nut für einen Sprengring und/oder einen Sprengring aufweist, welche/welcher eine Trennung von Ösenkörper und Verstellvorrichtungskörper unterbindet und/oder welche/welcher den Ösenkörper am Verstellvorrichtungskörper halten kann/können.

Alle vorgenannten Varianten verursachen in der Produktion einen nur geringen Aufwand und sind somit kostenarm bereitstellbar.

Außerdem kann der Rand der ersten Durchführung auf einer Seite, insbesondere auf einer ersten Seitenfläche, des Verstellvorrichtungskörpers entlang oder innerhalb einer ersten Ebene angeordnet sein. Ferner kann der Rand der zweiten Durchführung auf einer Seite, insbesondere auf einer ersten Seitenfläche, des Verstellvorrichtungskörpers entlang oder innerhalb einer zweiten Ebene angeordnet sein. Dabei können sich die erste und zweite Ebene in einem Winkel schneiden. Durch die winkelige Ausgestaltung ist bei Führung einer Leine durch die erste und zweite Durchführung eine höhere Reibung auf die Leine erzeugbar, insbesondere für den Fall, wenn ein Haustier an der Haustierleine zieht. Konkret geschildert, ist die Position der Verstellvorrichtung an einer Leine bei einwirkender Zugkraft von zum Beispiel einem Haustier nicht veränderbar.

Des Weiteren kann die Verstellvorrichtung einen Steg aufweisen, den sich die erste und zweite Durchführung teilen und/oder der an der Schnittlinie der ersten und zweiten Ebene und/oder am Übergang von erster zu zweiter Ebene angeordnet ist. Alternativ oder ergänzend kann die Verstellvorrichtung einen Steg aufweisen, welcher am Übergang von der ersten zur zweiten Durchführung angeordnet ist und/oder von welchem eine Leine umlenkbar ist, um ausreichend Reibung zu erzeugen. Dadurch kann die Position des Verstellvorrichtungskörpers an einer Leine sicherbar sein. Zudem kann eine höhere Reibung auf die Leine erzeugt werden, insbesondere dann, wenn ein Haustier an der Leine zieht. In der Folge kann die relative Position der Verstellvorrichtung an einer Leine bei einwirkender Zugkraft von zum Beispiel einem Haustier schwer bis gar nicht verändert werden.

Ferner kann vorgesehen sein, dass die erste, zweite und dritte Durchführung und/oder eine weitere Durchführung entlang einer Längserstreckung der Verstellvorrichtung hintereinander und/oder in Reihe angeordnet sind. Somit ist ein einfach herzustellende Ausgestaltung der Verstellvorrichtung möglich. Auch erleichtert diese lineare Anordnung die Handhabung sowie die Führung einer Leine durch die Durchführungen.

Zudem ist es möglich, dass der Verstellvorrichtungskörper ein erstes und ein zweites Ende aufweist. Dabei kann die erste Durchführung teilweise das erste Ende und die zweite Durchführung teilweise das zweite Ende bilden. Auch kann der Ösenkörper am zweiten Ende angeordnet sein. Ferner ist es möglich, dass das erste und zweite Ende so zueinander orientiert sind, dass die beiden Enden in einer Richtung quer zur Längserstreckung versetzt angeordnet sind. Auf diese Weise kann auf eine in den Durchführungen geführte Leine eine höhere Reibkraft aufgebracht werden. Somit ist also die Position der Verstellvorrichtung an einer Leine bei einwirkender Zugkraft von zum Beispiel einem Haustier schwer bis gar nicht veränderbar.

Des Weiteren kann der Verstellvorrichtungskörper ein erstes und ein zweites Ende aufweisen. Dabei ist es möglich, dass die erste Durchführung in Richtung des ersten Endes konisch und/oder verengend zulaufend ausgebildet ist, um eine Verengung für eine Leine zu bilden. Somit kann eine Leine unter Zug mit einer erhöhten Reibung beaufschlagbar sein. Alternativ oder ergänzend kann die zweite Durchführung in Richtung des zweiten Endes konisch und/oder verengend zulaufend ausgebildet sein, um eine Verengung für eine Leine zu bilden. Auf diese Weise kann ebenfalls eine Leine unter Zug mit einer erhöhten Reibung beaufschlagbar sein. Eine erhöhte Reibung führt in beiden Fällen dazu, dass die relative Position der Verstellvorrichtung an einer Leine bei einwirkender Zugkraft von zum Beispiel einem Haustier nicht veränderbar ist.

Ferner ist es möglich, dass die erste und zweite Durchführung einen ovalen Querschnitt beziehungsweise eine ovale Form aufweisen. Diese Ausgestaltung begünstigt die voranstehend erwähnte konisch und/oder verengend zulaufende Ausbildung der ersten und/oder zweiten Durchführung.

Außerdem kann der Verstellvorrichtungskörper eine erste und eine zweite Seitenfläche aufweisen, die gegenüberliegend angeordnet sein können. Ferner kann der Verstellvorrichtungskörper mindestens eine weitere Seitenfläche aufweisen, welche die erste Seitenfläche des Verstellvorrichtungskörpers mit der zweiten Seitenfläche des Verstellvorrichtungskörpers verbinden kann. Mithilfe dieser Ausgestaltung kann ein dreidimensionaler Verstellvorrichtungskörper, insbesondere mit besonders günstigen Handhabungseigenschaften, gebildet werden.

Zudem kann vorgesehen sein, dass sich die erste und zweite Durchführung von der ersten Seitenfläche des Verstellvorrichtungskörpers hin zur zweiten Seitenfläche des Verstellvorrichtungskörpers erstrecken.

Des Weiteren kann die mindestens eine weitere Seitenfläche Griffmulden aufweisen und/oder definieren, die zwischen den Durchführungen ausgebildet sein können. Somit kann die Verstellvorrichtung auf die anatomische Gestaltung einer Hand optimal angepasst werden, wodurch deren Handhabung erleichtert und ein bequemes Greifen ermöglicht wird.

Außerdem kann mindestens ein Übergang von der ersten Seitenfläche zur weiteren Seitenfläche oder umgekehrt verrundet oder abgerundet ausgebildet sein, um eine Leine bei der Nutzung zu schonen.

Alternativ oder ergänzend kann mindestens ein Übergang von der zweiten Seitenfläche zur weiteren Seitenfläche oder umgekehrt verrundet oder abgerundet ausgebildet sein, um eine Leine bei der Nutzung zu schonen. Auch können die Durchführungen selbst verrundet oder abgerundet ausgebildet sein, um eine Leine bei der Nutzung zu schonen. Zudem dienen die Verrundungen einer einfach und angenehmen Haustierhalter-Handhabung.

Des Weiteren kann der Verstellvorrichtungskörper und/oder der Ösenkörper Metall, Aluminium und/oder Kunststoff aufweisen und/oder zumindest abschnittsweise oder vollständig aus Metall, aus Aluminium und/oder aus Kunststoff ausgebildet sein. Alternativ oder ergänzend kann der Verstellvorrichtungskörper und/oder der Ösenkörper einteilig oder einstückig ausgebildet sein. Somit können die Herstellung vereinfacht und die Produktionskosten gesenkt werden. Zudem ist eine robuste Ausgestaltung mithilfe der genannten Materialien möglich.

Ein zweiter Aspekt der vorliegenden Erfindung betrifft ebenfalls eine Verstellvorrichtung für eine Leine. Auch eine Verstellvorrichtung gemäß dem zweiten Aspekt kann beispielsweise als Schnalle und/oder als Leinenklemme und/oder als Reibklemme bezeichnet oder verstanden werden.

Es wird ausdrücklich darauf hingewiesen, dass die Merkmale der Verstellvorrichtung, wie sie unter dem ersten Aspekt erwähnt werden, einzeln oder miteinander kombinierbar bei der Verstellvorrichtung nach dem zweiten Aspekt verwendet werden oder vorgesehen sein können.

Eine Verstellvorrichtung für eine Haustierleine gemäß dem zweiten Aspekt, insbesondere zur variablen Längenverstellung einer Haustierleine, weist einen Verstellvorrichtungskörper mit einer ersten und einer zweiten Durchführung zur Erzeugung einer Reibkraft auf eine Leine auf. Genannte Verstellvorrichtung kann beispielsweise auch als Schnalle oder als Leinenklemme oder als Reibklemme bezeichnet werden.

Ferner weist die Verstellvorrichtung gemäß dem zweiten Aspekt eine weitere Durchführung zur Befestigung einer Befestigungseinrichtung einer Leine an dem Verstellvorrichtungskörper auf. Es ist aber auch möglich, einen Kotbeutel oder einen Kotbeutelspender an der weiteren Durchführung anzubinden. Mithin kann an der weiteren Durchführung mithilfe zum Beispiel einer Befestigungseinrichtung ein Haustierhalsband an der Verstellvorrichtung befestigt werden. Dies ist zum Beispiel beim Anbinden eines Haustiers vor einem Lebensmittelgeschäft von Nutzen.

Des Weiteren kann die weitere Durchführung in bevorzugter Weise an der ersten Durchführung angeordnet sein.

Der Verstellvorrichtungskörper kann ein erstes und ein zweites Ende aufweisen. Dabei kann die erste Durchführung teilweise das erste Ende und die zweite Durchführung teilweise das zweite Ende bilden. Zudem kann die weitere Durchführung am ersten Ende angeordnet sein und den Verstellvorrichtungskörper verlängern. Somit können die drei Durchführungen beziehungsweise die erste, die zweite und die weitere Durchführung hintereinander und/oder in einer Linie versetzt zueinander angeordnet werden. Dies erleichtert die Herstellung sowie die Handhabung für einen Haustierhalter oder Nutzer.

Außerdem kann vorgesehen sein, dass die erste Durchführung zwischen der weiteren und der zweiten Durchführung angeordnet ist und/oder dass der Rand der ersten Durchführung und der Rand der weiteren Durchführung auf einer Seite, zum Beispiel auf einer ersten Seitenfläche, des Verstellvorrichtungskörpers innerhalb einer ersten Ebene angeordnet sind. Somit sind die erste und die weitere Durchführung oder auch deren Öffnungen innerhalb einer gemeinsamen Ebene anordenbar. Dadurch kann die Nachbearbeitung erleichtert werden. Auch wird durch diese Formgebung die Herstellung vereinfacht.

Ein dritter Aspekt der vorliegenden Erfindung betrifft eine Haustierleine.

Es wird ausdrücklich darauf hingewiesen, dass die Merkmale der Verstellvorrichtung, wie sie unter dem ersten Aspekt und/oder unter dem zweiten Aspekt erwähnt werden, einzeln oder miteinander kombinierbar bei der Haustierleine Anwendung finden oder vorgesehen sein können.

Eine Haustierleine weist eine Verstellvorrichtung nach dem ersten und/oder zweiten Aspekt sowie eine Leine zum Führen und Sichern eines Haustieres auf, wobei die Leine zumindest teilweise durch die Verstellvorrichtung geführt ist. Somit ist mithilfe der Verstellvorrichtung zum Beispiel die Leinenlänge zwischen Haustier und Verstellvorrichtung veränderbar.

Dabei kann die Leine als Seil, Band, Gurt oder Riemen ausgebildet sein. Je nach Gewicht und Zugkraft eines Haustieres kann die entsprechend geeignete Ausgestaltung einer Leine gewählt werden.

Des Weiteren kann die Haustierleine an einem ersten Ende der Leine eine Befestigungseinrichtung zur Befestigung an einem Geschirr oder einem Halsband aufweisen. Die Befestigungseinrichtung kann als Bolzenkarabiner ausgebildet sein. Somit kann die Haustierleine schnell und leicht an einem Halsband eines Haustiers befestigt oder von diesem gelöst werden.

Ferner kann die Haustierleine an einem zweiten Ende der Leine eine nicht öffenbare Schlinge bilden. Die Schlinge dient dem Bilden einer Schlaufe zum Halten der Haustierleine. Zudem dient die Schlinge dem verbesserten Greifen der Haustierleine mit einer Hand oder einem Umschlingen eines Handgelenks oder auch einem derartigen Umlegen der Haustierleine, dass diese um den Hals und unter der Achsel eines Haustierhalters verlaufen kann.

Der Teil beziehungsweise Abschnitt der Leine, der die nicht öffenbare Schlinge bildet, kann durch den Ösenkörper der Verstellvorrichtung geführt sein. Somit ist die Leine über die nicht öffenbare Schlinge fest mit der Verstellvorrichtung verbunden. Folglich kann eine von der Leine gebildete Schlaufe nicht aufgelöst werden.

Zudem kann der Ösenkörper der Verstellvorrichtung so an der nicht öffenbaren Schlinge angeordnet sein, dass der Teil oder Abschnitt der Leine, der die nicht öffenbare Schlinge bildet, durch die dritte Durchführung des Ösenkörpers der Verstellvorrichtung hindurchgeführt ist. Dadurch ist das zweite Ende der Leine an der Verstellvorrichtung befestigbar. Ferner ist dadurch das zweite Ende der Leine zusammen mit dem Ösenkörper relativ zum Verstellvorrichtungskörper drehbar.

Des Weiteren kann die Leine von Seiten der zweiten Seitenfläche des Verstellvorrichtungskörpers durch die erste Durchführung in Richtung der ersten Seitenfläche und von Seiten der ersten Seitenfläche des Verstellvorrichtungskörpers durch die zweite Durchführung in Richtung der zweiten Seitenfläche geführt sein. Da die erste Durchführung in Richtung des ersten Endes konisch und/oder verengend zulaufend ausgebildet sein kann und die zweite Durchführung in Richtung des zweiten Endes konisch und/oder verengend zulaufend ausgebildet sein kann, kann die Leine unter Zug mit einer erhöhten Reibung beaufschlagt werden. Dies begünstigt das Halten einer relativen Position zwischen Leine und Verstellvorrichtung.

Mithin kann die Leinenlänge und somit auch die Größe einer Schlaufe zum Halten der Haustierleine mit einer Hand unter Zug wenig oder nur gering veränderbar sein. Somit kann der Abstand zwischen einem Haustierhalter und einem Haustier unter Zug nicht verändert werden beziehungsweise mit hoher Sicherheit aufrecht erhalten bleiben.

Ein vierter Aspekt der vorliegenden Erfindung umfasst ein Leinenführungsset für ein Haustier.

Es wird ausdrücklich darauf hingewiesen, dass die Merkmale der Haustierleine, wie sie unter dem dritten Aspekt erwähnt werden, einzeln oder miteinander kombinierbar bei dem Leinenführungsset Anwendung finden oder vorgesehen sein können.

Ein Leinenführungsset für ein Haustier gemäß dem vierten Aspekt weist ein Brustgeschirr oder ein Halsband für ein Haustier auf. Zudem weist das Leinenführungsset eine Haustierleine nach dem dritten Aspekt auf. Dabei ist das Brustgeschirr oder das Halsband ausgebildet, an der Haustierleine lösbar befestigt zu werden.

Nachstehend wird die Erfindung anhand von Ausführungsbeispielen in Verbindung mit zugehörigen Zeichnungen näher erläutert. Hierbei zeigen schematisch:
- Fig. 1: eine Draufsicht auf eine Verstellvorrichtung für eine Haustierleine;
- Fig. 2: eine räumliche Unteransicht der Verstellvorrichtung aus Fig. 1;
- Fig. 3: eine Seitenansicht auf die Verstellvorrichtung aus Fig. 1;
- Fig. 4: eine Untersicht auf die Verstellvorrichtung aus Fig. 1;
- Fig. 5: eine räumliche Draufsicht auf die Verstellvorrichtung aus Fig. 1;
- Fig. 6: eine Haustierleine in einem ersten Zustand mit einer Verstellvorrichtung für eine Haustierleine;
- Fig. 7: die Haustierleine aus Fig. 6, jedoch in einem zweiten Zustand;
- Fig. 8: die Haustierleine aus Fig. 6, jedoch in einem dritten Zustand;
- Fig. 9: eine Vergrößerung der Verstellvorrichtung an der Haustierleine aus Fig. 8;
- Fig. 10: eine Vergrößerung der Verstellvorrichtung an der Haustierleine aus Fig. 6 in Perspektivdarstellung,
- Fig. 11: eine weitere Vergrößerung der Verstellvorrichtung an der Haustierleine aus Fig. 6 in Perspektivdarstellung.

In der nachfolgenden Beschreibung werden gleiche Bezugszeichen für gleiche Gegenstände verwendet.

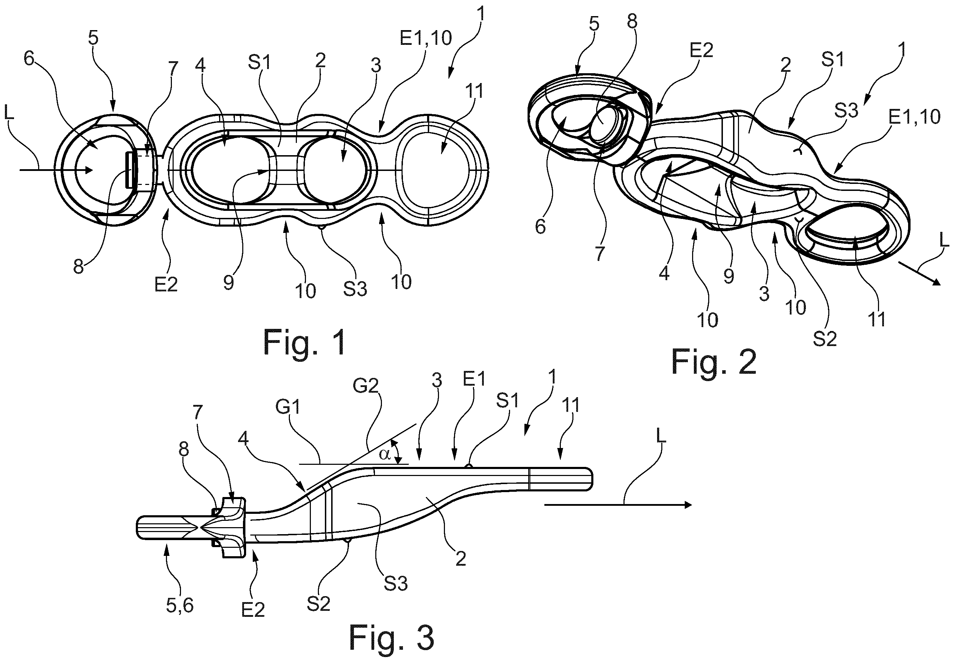

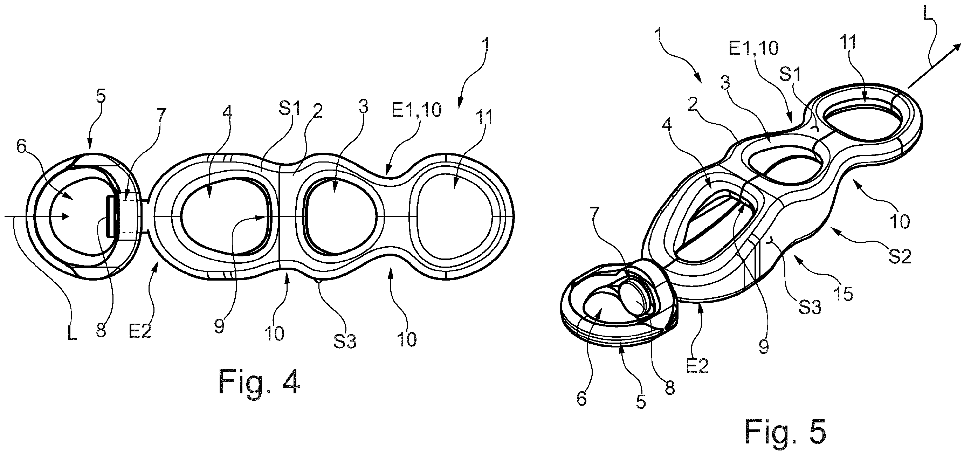

Figur 1 zeigt eine Draufsicht auf eine Verstellvorrichtung 1 für eine Haustierleine 20, wohingegen in Figur 4 eine Untersicht auf die Verstellvorrichtung 1 aus Figur 1 dargestellt ist. Figur 2 zeigt eine räumliche Unteransicht und Figur 5 eine räumliche Draufsicht auf die Verstellvorrichtung 1 aus Figur 1. In Figur 3 ist eine Seitenansicht auf die Verstellvorrichtung 1 aus Figur 1 gezeigt. Der Einfachheit halber werden die Figuren 1 bis 5 nachstehend gemeinsam beschrieben.

So ist in genannten Figuren eine Verstellvorrichtung 1 für eine Haustierleine 20 dargestellt. Die Verstellvorrichtung 1 weist einen Verstellvorrichtungskörper 2 mit einer ersten und einer zweiten Durchführung 3, 4 zur Erzeugung einer Reibkraft auf eine Leine 21 - hier nicht dargestellt - auf. Ferner weist die Verstellvorrichtung 1 einen mit dem Verstellvorrichtungskörper 2 gekoppelten Ösenkörper 5 auf, der eine dritte Durchführung 6 zur Befestigung eines Endes X2 einer Leine 21 - hier nicht näher dargestellt - aufweist.

Dabei ist der Ösenkörper 5 relativ zum Verstellvorrichtungskörper 2 drehbar angeordnet. Somit kann beispielsweise bei Anordnung eines Endes einer Leine 21 an der dritten Durchführung 6 eine Drehung von Leine 21 und Ösenkörper 5 relativ zum Verstellvorrichtungskörper 2 gewährleistet werden, ohne dass sich die Leine 21 bei einer weiteren Handhabung weiter verdreht. Dies vereinfacht die Handhabung der Verstellvorrichtung 1.

Aus den Figuren 1 und 5 geht hervor, dass der Ösenkörper 5 eine Aufnahme 7 für einen Bolzen 8 aufweist, um welchen der Ösenkörper 5 drehbar ist. Anders ausgedrückt weist der Verstellvorrichtungskörper 2 an seinem zweiten Ende E2 oder bei der zweiten Durchführung 4 einen Bolzen 8 auf, um welchen der Ösenkörper 5 drehbar ist. Diese Ausgestaltung ist nicht nur mit geringem Aufwand zu realisieren, sondern auch kostenarm in der Herstellung.

Dabei weist das freikragende Ende des Bolzens 8 einen Kopf mit seitlich überstehendem Kragen, insbesondere nach Art eines Nietkopfs, auf, welcher eine Trennung von Ösenkörper 5 und Verstellvorrichtungskörper 2 unterbindet. Alternativ ist es möglich, dass am freikragenden Ende des Bolzens 8 ein Sprengring, zum Beispiel in einer Nut des Bolzens 8 angeordnet ist, welcher den Ösenkörper 5 am Verstellvorrichtungskörper 2 hält. Beide Varianten verursachen in der Produktion einen geringen Aufwand und sind somit kostenarm.

Gemäß Figur 3 ist der Rand der ersten Durchführung 3 auf einer ersten Seitenfläche S1 des Verstellvorrichtungskörpers 2 innerhalb einer ersten Ebene G1 angeordnet. Zudem ist der Rand der zweiten Durchführung 4 auf der ersten Seitenfläche S1 des Verstellvorrichtungskörpers 2 innerhalb einer zweiten Ebene G2 angeordnet. Die erste und zweite Ebene G1, G2 schneiden sich in einem Winkel a. Dieser ist im vorliegenden Ausführungsbeispiel 35 Grad. Der Winkel α kann aber auch weitere Werte annehmen.

Durch die winkelige Ausgestaltung ist bei Führung einer Leine 21 (nicht dargestellt) durch die erste und zweite Durchführung 3, 4 eine höhere Reibung auf die Leine 21 erzeugbar, insbesondere für den Fall, wenn ein Haustier an der Haustierleine zieht. Konkret geschildert, ist die Position der Verstellvorrichtung 1 an einer Leine 21 bei einwirkender Zugkraft von zum Beispiel einem Haustier nicht veränderbar.

Des Weiteren zeigen die Figuren 1 bis 5 einen Steg 9, den sich die erste und zweite Durchführung 3, 4 teilen. Zudem ist der Steg 9 an der Schnittlinie der ersten und zweiten Ebene G1, G angeordnet ist. Außerdem ist der Steg 9 am Übergang von der ersten zur zweiten Durchführung 3, 4 angeordnet. Dabei kann von dem Steg 9 eine Leine 21 - hier nicht näher dargestellt - umgelenkt werden, um ausreichend Reibung zu erzeugen, sodass die Position des Verstellvorrichtungskörpers 2 an einer Leine 21 sicherbar ist. Zudem kann eine höhere Reibung auf die Leine 21 erzeugt werden, insbesondere dann, wenn ein Haustier an der Leine zieht. In der Folge kann die relative Position der Verstellvorrichtung 1 an einer Leine 21 bei einwirkender Zugkraft von zum Beispiel einem Haustier schwer bis gar nicht verändert werden.

Wie in den Figuren 1 bis 5 ferner gezeigt, sind die erste, zweite und dritte Durchführung 3, 4, 6 und/oder eine weitere Durchführung 11 entlang einer Längserstreckung L der Verstellvorrichtung 1 hintereinander und/oder in Reihe angeordnet.

Außerdem zeigen die Figuren 1 bis 5, dass der Verstellvorrichtungskörper 2 ein erstes und ein zweites Ende E1, E2 aufweist, wobei die erste Durchführung 3 teilweise das erste Ende E1 und die zweite Durchführung 4 teilweise das zweite Ende E2 bildet. Dabei geht aus den vorgenannten Figuren zudem hervor, dass der Ösenkörper 5 am zweiten Ende E2 angeordnet ist. Außerdem sind das erste und zweite Ende E1, E2 so zueinander orientiert, dass die beiden Enden E1, E2 in einer Richtung quer zur Längserstreckung L versetzt angeordnet sind, vergleiche Figur 3. Auf diese Weise kann auf eine in den Durchführungen 3, 4 geführte Leine 21 eine höhere Reibkraft aufgebracht werden. Somit ist also die Position der Verstellvorrichtung 1 an einer Leine 21 bei einwirkender Zugkraft von zum Beispiel einem Haustier schwer bis gar nicht veränderbar.

Wie bereits erwähnt, weist der Verstellvorrichtungskörper 2 ein erstes und ein zweites Ende E1, E2 auf. Dabei ist die erste Durchführung 3 in Richtung des ersten Endes E1, wie in Figuren 1 und 4 dargestellt, konisch und/oder verengend zulaufend ausgebildet, um eine Verengung für eine Leine 21 zu bilden. Dadurch ist eine Leine 21 unter Zug mit einer erhöhten Reibung beaufschlagbar. Zudem ist die zweite Durchführung 4 in Richtung des zweiten Endes E2 konisch und/oder verengend zulaufend ausgebildet (vergleiche Figur 1 und 4), um eine Verengung für eine Leine 21 zu bilden. Somit ist eine Leine 21 unter Zug mit einer erhöhten Reibung beaufschlagbar. Eine erhöhte Reibung führt in beiden Fällen dazu, dass die relative Position der Verstellvorrichtung 1 an einer Leine 21 bei einwirkender Zugkraft von zum Beispiel einem Haustier nicht veränderbar ist.

Wie aus den Figuren 2 und 5 gut zu erkennen, weist der Verstellvorrichtungskörper 2 - wie bereits erwähnt - eine erste und eine zweite Seitenfläche S1, S2 auf, die gegenüberliegend angeordnet sind. Zudem hat der Verstellvorrichtungskörper 2 eine weitere Seitenfläche S3. Die weitere Seitenfläche S3 verbindet die erste Seitenfläche S1 mit der zweiten Seitenfläche S2, um dadurch einen dreidimensionalen Verstellvorrichtungskörper 2 zu bilden.

Des Weiteren erstrecken sich die erste und zweite Durchführung 3, 4 von der ersten Seitenfläche S1 des Verstellvorrichtungskörpers 2 hin zur zweiten Seitenfläche S2 des Verstellvorrichtungskörpers 2.

Wie insbesondere aus den Figuren 1, 2, 4 und 5 hervorgeht, definiert und/oder weist die weitere Seitenfläche S3 Griffmulden 10 auf, die zwischen den Durchführungen 3, 4, 11 ausgebildet sind. Dabei sind die Übergänge von der ersten Seitenfläche S1 zur weiteren Seitenfläche S3 oder umgekehrt verrundet oder abgerundet ausgebildet, um eine Leine 21 bei der Nutzung zu schonen. Zudem sind die Übergänge von der zweiten Seitenfläche S2 zur weiteren Seitenfläche S3 oder umgekehrt verrundet oder abgerundet ausgebildet, um ebenfalls eine Leine 21 bei der Nutzung zu schonen. Auch die Durchführungen 3, 4, 11 selbst sind verrundet oder abgerundet ausgebildet, um eine Leine 21 bei der Nutzung zu schonen.

Außerdem geht aus den Figuren 1 bis 5 hervor, dass die Verstellvorrichtung 1 eine weitere Durchführung 11 zur Befestigung einer Befestigungseinrichtung 22 einer Leine 21 - hier nicht dargestellt - an dem Verstellvorrichtungskörper 2 aufweist.

Die weitere Durchführung 11 ist an der ersten Durchführung 3 angeordnet. Der Verstellvorrichtungskörper 2 weist - wie bereits erwähnt - ein erstes und ein zweites Ende E1, E2 auf, wobei die erste Durchführung 3 teilweise das erste Ende E1 und die zweite Durchführung 4 teilweise das zweite Ende E2 bildet. Dabei ist die weitere Durchführung 11 am ersten Ende E1 angeordnet und verlängert dadurch den Verstellvorrichtungskörper 2.

An der weiteren Durchführung 11 kann mithilfe zum Beispiel einer Befestigungseinrichtung 22 ein Haustierhalsband an der Verstellvorrichtung 1 befestigt werden. Dies ist zum Beispiel beim Anbinden eines Haustiers vor einem Lebensmittelgeschäft von Nutzen. Es ist aber auch möglich, einen Kotbeutel oder einen Kotbeutelspender an der weiteren Durchführung 11 anzubinden.

Gemäß den Figuren 1 bis 5 ist die erste Durchführung 3 zwischen der weiteren 11 und der zweiten Durchführung 4 angeordnet, wobei der Rand der ersten Durchführung 3 und der Rand der weiteren Durchführung 11 auf der ersten Seitenfläche S1 des Verstellvorrichtungskörpers 2 innerhalb der ersten Ebene G1 angeordnet sind, vergleiche hierzu Figur 2.

Der Verstellvorrichtungskörper 2 und/oder der Ösenkörper 5 weisen Metall, Aluminium oder Kunststoff auf und/oder sind zumindest abschnittsweise oder vollständig aus Metall, aus Aluminium oder aus Kunststoff ausgebildet. Dabei ist der Verstellvorrichtungskörper 2 und/oder der Ösenkörper 5 einteilig oder einstückig ausgebildet.

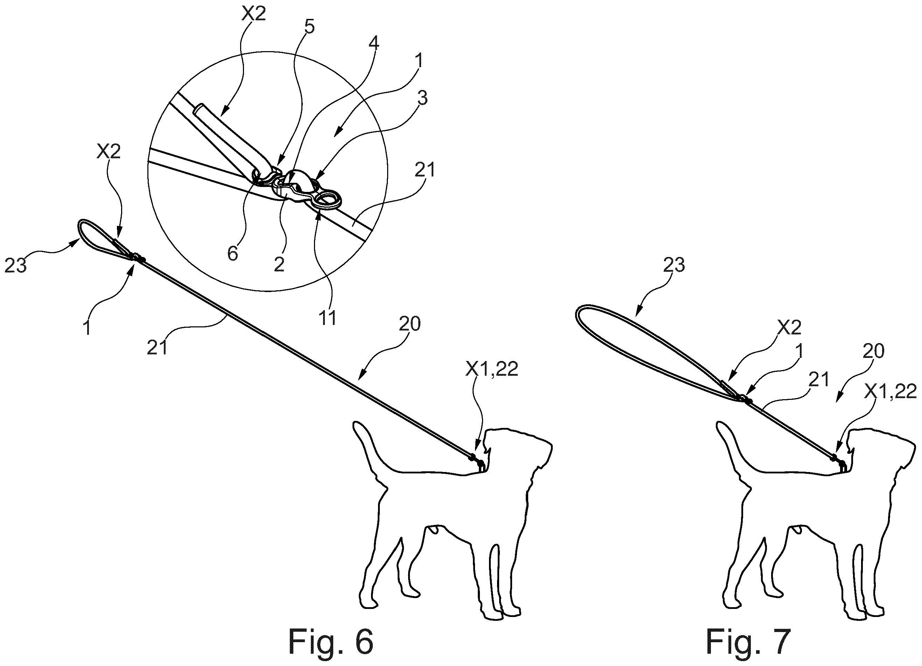

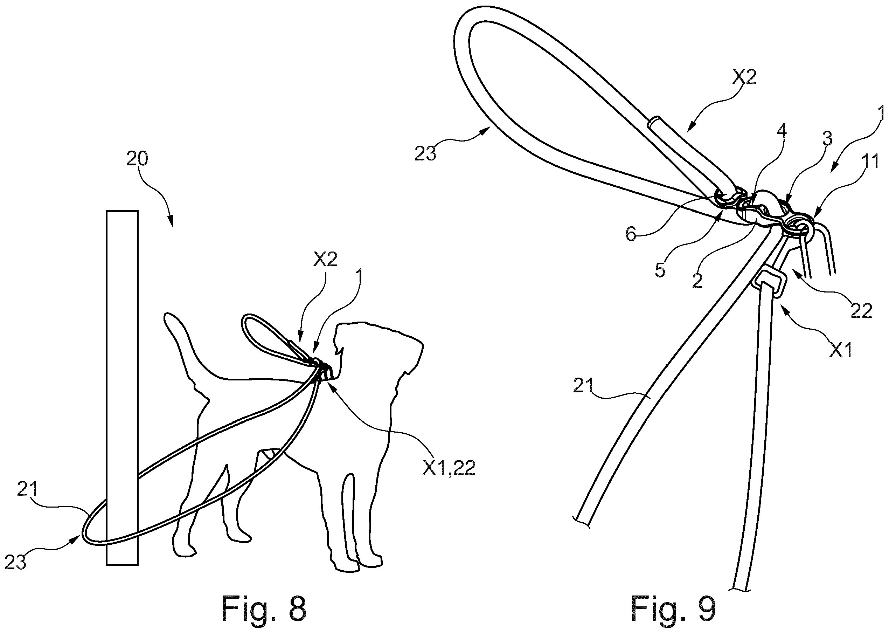

Figur 6 zeigt eine Haustierleine 20 in einem ersten Zustand mit einer Verstellvorrichtung 1 für die Haustierleine. Dabei ist in Figur 7 die Haustierleine 20 aus Figur 6, jedoch in einem zweiten Zustand, und in Figur 8 die Haustierleine 20 aus Figur 6, jedoch in einem dritten Zustand, gezeigt. In Figur 9 ist eine Vergrößerung der Verstellvorrichtung 1 an der Haustierleine 20 aus Figur 8 dargestellt. Der Einfachheit halber werden die Figuren 6 bis 9 nachstehend gemeinsam beschrieben.

Zunächst ist betreffend die Figuren 6 bis 9 festzuhalten, dass diese - wie schon erläutert - eine Haustierleine 20 zeigen. Die Haustierleine 20 weist eine Verstellvorrichtung 1 gemäß den Figuren 1 bis 5 und eine Leine 21 zum Führen und Sichern eines Haustieres auf. Dabei ist die Leine 21 zumindest teilweise durch die Verstellvorrichtung 1 geführt. Die Leine 21 ist im vorliegenden Fall als Seil ausgebildet, kann aber auch als Band, Gurt oder Riemen ausgebildet sein.

Zudem zeigen die Figuren 6 bis 9, dass die Haustierleine 20 an einem ersten Ende X1 der Leine 21 eine Befestigungseinrichtung 22 zur Befestigung an einem Geschirr oder an einem Halsband aufweist und dass die Befestigungseinrichtung 22 als Bolzenkarabiner ausgebildet ist, vergleiche insbesondere Figur 9.

Außerdem geht aus den Figuren 6 bis 9 hervor, dass die Haustierleine 20 an einem zweiten Ende X2 der Leine 21 eine nicht öffenbare Schlinge bildet. Die Schlinge dient dem Bilden einer Schlaufe 23 zum Halten der Haustierleine.

Zudem ist der Ösenkörper 5 der Verstellvorrichtung 1 so an der nicht öffenbaren Schlinge angeordnet, dass der Teil der Leine 21, der die nicht öffenbare Schlinge bildet, durch die dritte Durchführung 6 des Ösenkörpers 5 der Verstellvorrichtung 1 geführt ist, vergleiche Figur 6.

Dabei ist der Ösenkörper 5 der Verstellvorrichtung 1 so an der nicht öffenbaren Schlinge angeordnet, dass der Teil oder Abschnitt der Leine 21, der die Schlinge bildet, durch die dritte Durchführung 6 des Ösenkörpers 5 der Verstellvorrichtung 1 hindurchgeführt ist. Dadurch ist das zweite Ende X2 der Leine 21 an der Verstellvorrichtung 1 befestigt. Ferner ist dadurch das zweite Ende X2 der Leine 21 zusammen mit dem Ösenkörper 5 relativ zum Verstellvorrichtungskörper 2 drehbar.

Ferner ist festzuhalten, dass in einem ersten Zustand nach Figur 6, die von der Leine 21 gebildete Schlaufe 23 eine erste Größe aufweist, wodurch sich eine erste aktive beziehungsweise wirksame Leinenlänge zwischen Verstellvorrichtung 1 und Befestigungseinrichtung 22 einstellt.

In Figur 7 ist ein zweiter Zustand gezeigt, in welchem eine zweite aktive beziehungsweise wirksame Leinenlänge zwischen Verstellvorrichtung 1 und Befestigungseinrichtung 22 dargestellt ist. Hierbei weist die Schlaufe 23 eine zweite Größe auf. Während die zweite Leinenlänge geringer ist als die erste, hat die zweite Größe der Schlaufe 23 im Vergleich zur ersten Größe der Schlaufe 23 an Umfang beziehungsweise Größe gewonnen.

Gemäß Figur 8, welche einen dritten Zustand der Haustierleine 20 zeigt, ist eine dritte Größe der Schlaufe 23 im Vergleich zur zweiten Größe der Schlaufe 23 nach Figur 7 nochmals angewachsen. Hingegen ist eine dritte aktive beziehungsweise wirksame Leinenlänge geringer als die erste und als die zweite. Die Verkürzung der aktiven beziehungsweise wirksamen Leinenlänge bei gleichzeitiger Vergrößerung der Schlaufe 23 dient dem Zweck, den Abstand zwischen einem Haustierhalter und einem Haustier zu verkürzen.

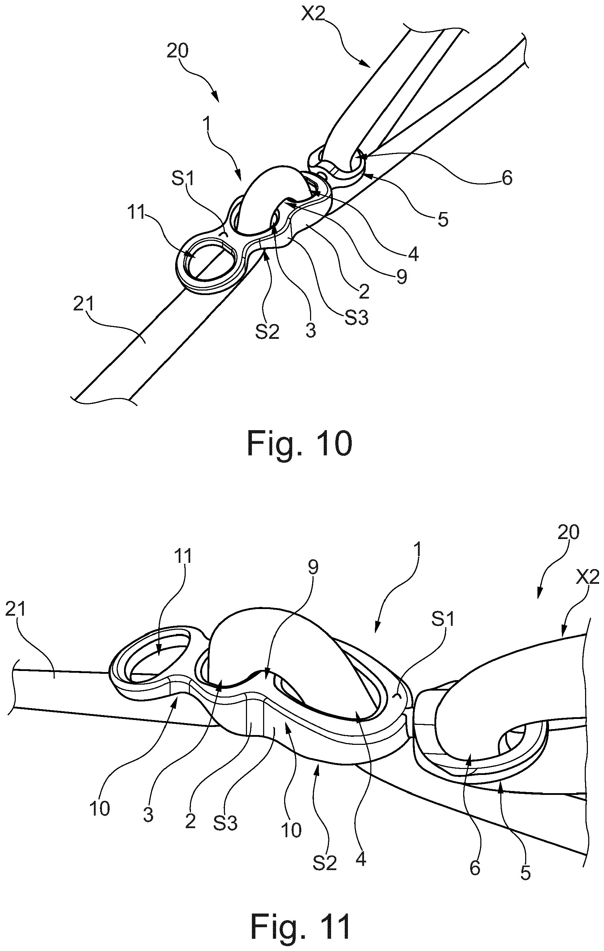

Figur 9 zeigt - wie schon erwähnt - eine Vergrößerung der Verstellvorrichtung 1 an der Haustierleine 20 aus Figur 8. In den Figuren 10 und 11 sind weitere Vergrößerungen der Verstellvorrichtung 1 an der Haustierleine 20 aus Figur 6 in unterschiedlichen Perspektiven, gezeigt.

Mit Blick auf Figur 9 ist eine Verstellvorrichtung 1 für eine Leine 21 gezeigt. Bei der Verstellvorrichtung 1 handelt es sich um eine Verstellvorrichtung 1 gemäß den Figuren 1 bis 5.

Hierbei weist die Verstellvorrichtung 1 - wie bereits bekannt - einen Verstellvorrichtungskörper 2 mit einer ersten und einer zweiten Durchführung 3, 4 zur Erzeugung einer Reibkraft auf eine Leine 21 auf. Zudem hat die Verstellvorrichtung 1 eine weitere Durchführung 11 zur Befestigung einer Befestigungseinrichtung 22 einer Leine 21 an dem Verstellvorrichtungskörper 2.

Die weitere Durchführung 11 ist an der ersten Durchführung 3 angeordnet. Dabei weist der Verstellvorrichtungskörper 2 ein erstes und ein zweites Ende E1, E2 auf, wobei die erste Durchführung 3 teilweise das erste Ende E1 und die zweite Durchführung 4 teilweise das zweite Ende E2 bildet. Dabei ist die weitere Durchführung 11 am ersten Ende E1 angeordnet und verlängert dadurch den Verstellvorrichtungskörper 2.

Gemäß Figur 9 in Zusammenschau mit Figur 8 kann an der weiteren Durchführung 11 mithilfe der Befestigungseinrichtung 22 ein Haustierhalsband mit der Verstellvorrichtung 1 verbunden werden. Dies ist zum Beispiel beim Anbinden eines Haustiers vor einem Lebensmittelgeschäft von Nutzen. Es ist aber auch möglich, einen Kotbeutel oder einen Kotbeutelspender an der weiteren Durchführung 11 anzubinden.

Gemäß den Figuren 10 und 11 ist die erste Durchführung 3 zwischen der weiteren 11 und der zweiten Durchführung 4 angeordnet, wobei der Rand der ersten Durchführung 3 und der Rand der weiteren Durchführung 11 auf einer ersten Seitenfläche S1 des Verstellvorrichtungskörpers 2 innerhalb einer ersten Ebene G1 angeordnet sind - vergleiche hierzu Figur 2.

Mit Blick auf die Figuren 6, 9 und 10, 11 fällt auf, dass die Leine 21 von Seiten der zweiten Seitenfläche S2 des Verstellvorrichtungskörpers 2 durch die erste Durchführung 3 in Richtung der ersten Seitenfläche S1 und von Seiten der ersten Seitenfläche S1 des Verstellvorrichtungskörpers 2 durch die zweite Durchführung 4 in Richtung der zweiten Seitenfläche S2 geführt ist. Da die erste Durchführung 3 in Richtung des ersten Endes E1 konisch und/oder verengend zulaufend ausgebildet ist und die zweite Durchführung 4 in Richtung des zweiten Endes E2 konisch und/oder verengend zulaufend ausgebildet ist, kann die Leine 21 unter Zug mit einer erhöhten Reibung beaufschlagt werden. Dies wiederum begünstigt das Halten der relativen Position zwischen Leine 21 und Verstellvorrichtung 1. Anders ausgedrückt, die aktive beziehungsweise wirksame Leinenlänge und somit auch die Größe der Schlaufe 23 sind unter Zug wenig oder nur gering veränderbar. Somit kann der Abstand zwischen einem Haustierhalter und einem Haustier unter Zug nicht verändert beziehungsweise mit hoher Sicherheit aufrecht erhalten werden.

Abschließend wird noch auf ein Leinenführungsset für ein Haustier eingegangen. Dieses weist ein Brustgeschirr oder ein Halsband für ein Haustier und eine Haustierleine 20, wie zuvor beschrieben, auf. Dabei ist das Brustgeschirr oder das Halsband dazu ausgebildet, an der Haustierleine lösbar befestigt zu werden.

### BEZUGSZEICHENLISTE

- 1: Verstellvorrichtung
- 2: Verstellvorrichtungskörper
- 3: erste Durchführung
- 4: zweite Durchführung
- 5: Ösenkörper
- 6: dritte Durchführung
- 7: Aufnahme
- 8: Bolzen
- 9: Steg
- 10: Griffmulde
- 11: weitere Durchführung
- 20: Haustierleine
- 21: Leine
- 22: Befestigungseinrichtung
- 23: Schlaufe
- E1: erstes Ende des Verstellvorrichtungskörpers
- E2: zweites Ende des Verstellvorrichtungskörpers
- X1: erstes Ende der Leine
- X2: zweites Ende der Leine
- S1: erste Seitenfläche
- S2: zweite Seitenfläche
- S3: Seitenfläche
- G1: erste Ebene
- G2: zweite Ebene
- α: Winkel
- L: Längserstreckung

## Patentansprüche

1. Verstellvorrichtung (1) für eine Haustierleine (20), insbesondere zur variablen Längenverstellung einer Haustierleine (20), aufweisend einen Verstellvorrichtungskörper (2) mit einer ersten und einer zweiten Durchführung (3, 4) zur Erzeugung einer Reibkraft auf eine Leine (21) und einen mit dem Verstellvorrichtungskörper (2) gekoppelten Ösenkörper (5), der eine dritte Durchführung (6) zur Befestigung eines Endes (X2) einer Leine (21) aufweist, wobei der Ösenkörper (5) relativ zum Verstellvorrichtungskörper (2) drehbar angeordnet ist.

2. Verstellvorrichtung (1) nach Anspruch 1, **dadurch gekennzeichnet, dass** der Ösenkörper (5) eine Aufnahme (7) für einen Bolzen (8) aufweist, um welchen der Ösenkörper (5) drehbar ist, dass der Verstellvorrichtungskörper (2) an seinem zweiten Ende (E2) oder bei der zweiten Durchführung (4) einen Bolzen (8) aufweist, um welchen der Ösenkörper (5) drehbar ist, und dass das freikragende Ende des Bolzens (8) einen Kopf mit seitlich überstehendem Kragen, insbesondere nach Art eines Nietkopfs, aufweist, welcher eine Trennung von Ösenkörper (5) und Verstellvorrichtungskörper (2) unterbindet oder dass das freikragende Ende des Bolzens (8) eine Nut für einen Sprengring und/oder einen Sprengring aufweist, welche/welcher eine Trennung von Ösenkörper und Verstellvorrichtungskörper unterbindet.

3. Verstellvorrichtung (1) nach Anspruch 1 oder 2, **dadurch gekennzeichnet, dass** der Rand der ersten Durchführung (3) auf einer Seite, insbesondere auf einer ersten Seitenfläche (S1), des Verstellvorrichtungskörpers (2) entlang oder innerhalb einer ersten Ebene (G1) angeordnet ist, dass der Rand der zweiten Durchführung (4) auf einer Seite, insbesondere auf einer ersten Seitenfläche (S1), des Verstellvorrichtungskörpers (2) entlang oder innerhalb einer zweiten Ebene (G2) angeordnet ist, und dass sich die erste und zweite Ebene (G1, G2) in einem Winkel (α) schneiden.

4. Verstellvorrichtung (1) nach einem der vorangehenden Ansprüche, **gekennzeichnet durch** einen Steg (9), den sich die erste und zweite Durchführung (3, 4) teilen und/oder der an der Schnittlinie der ersten und zweiten Ebene (G1, G2) angeordnet ist, und/oder **gekennzeichnet durch** einen Steg (9), welcher am Übergang von der ersten zur zweiten Durchführung (3, 4) angeordnet ist und/oder von welchem eine Leine (21) umlenkbar ist, um ausreichend Reibung zu erzeugen, sodass die Position des Verstellvorrichtungskörpers (2) an einer Leine (21) sicherbar ist.

5. Verstellvorrichtung (1) nach einem der vorangehenden Ansprüche,
**dadurch gekennzeichnet, dass** die erste, zweite und dritte Durchführung (3, 4, 6) und/oder eine weitere Durchführung (11) entlang einer Längserstreckung (L) der Verstellvorrichtung (1) hintereinander und/oder in Reihe angeordnet sind.

6. Verstellvorrichtung (1) nach einem der vorangehenden Ansprüche,
**dadurch gekennzeichnet, dass** der Verstellvorrichtungskörper (2) ein erstes und ein zweites Ende (E1, E2) aufweist, dass die erste Durchführung (3) teilweise das erste Ende (E1) und die zweite Durchführung (4) teilweise das zweite Ende (E2) bildet, dass der Ösenkörper (5) am zweiten Ende (E2) angeordnet ist, dass das erste und zweite Ende (E1, E2) so zueinander orientiert sind, dass die beiden Enden (E1, E2) in einer Richtung quer zur Längserstreckung (L) versetzt angeordnet sind.

7. Verstellvorrichtung (1) nach einem der vorangehenden Ansprüche,
**dadurch gekennzeichnet, dass** der Verstellvorrichtungskörper (2) ein erstes und ein zweites Ende (E1, E2) aufweist, dass die erste Durchführung (3) in Richtung des ersten Endes (E1) konisch und/oder verengend zulaufend ausgebildet ist, um eine Verengung für eine Leine (21) zu bilden, sodass eine Leine (21) unter Zug mit einer erhöhten Reibung beaufschlagbar ist, und/oder dass die zweite Durchführung (4) in Richtung des zweiten Endes (E2) konisch und/oder verengend zulaufend ausgebildet ist, um eine Verengung für eine Leine (21) zu bilden, sodass eine Leine (21) unter Zug mit einer erhöhten Reibung beaufschlagbar ist.

8. Verstellvorrichtung (1) für eine Leine (21), insbesondere nach einem der vorangehenden Ansprüche, aufweisend einen Verstellvorrichtungskörper (2) mit einer ersten und einer zweiten Durchführung (3, 4) zur Erzeugung einer Reibkraft auf eine Leine und mit einer weiteren Durchführung (11) zur Befestigung einer Befestigungseinrichtung (22) einer Leine (21) an dem Verstellvorrichtungskörper (2).

9. Verstellvorrichtung (1) nach Anspruch 8, **dadurch gekennzeichnet, dass** die weitere Durchführung (11) an der ersten Durchführung (3) angeordnet ist und/oder dass der Verstellvorrichtungskörper (2) ein erstes und ein zweites Ende (E1, E2) aufweist und/oder dass die erste Durchführung (3) teilweise das erste Ende (E1) und die zweite Durchführung (4) teilweise das zweite Ende (E2) bildet und/oder dass die weitere Durchführung (11) am ersten Ende (E1) angeordnet ist und den Verstellvorrichtungskörper (2) verlängert.

10. Verstellvorrichtung (1) nach Anspruch 8 oder 9, **dadurch gekennzeichnet,** die erste Durchführung (3) zwischen der weiteren (11) und der zweiten Durchführung (4) angeordnet ist und/oder dass der Rand der ersten Durchführung (3) und der Rand der weiteren Durchführung (11) auf einer Seite, insbesondere auf einer ersten Seitenfläche (S1), des Verstellvorrichtungskörpers (2) innerhalb einer ersten Ebene (G1) angeordnet sind.

11. Haustierleine (20) aufweisend eine Verstellvorrichtung (1) nach einem der vorangehenden Ansprüche und eine Leine (21) zum Führen und Sichern eines Haustieres, wobei die Leine (21) zumindest teilweise durch die Verstellvorrichtung (1) geführt ist.

12. Haustierleine (20) nach Anspruch 11, **dadurch gekennzeichnet, dass** die Haustierleine (20) an einem ersten Ende (X1) der Leine (21) eine Befestigungseinrichtung (22) zur Befestigung an einem Geschirr oder einem Halsband aufweist und dass die Befestigungseinrichtung (22) vorzugsweise als Bolzenkarabiner ausgebildet ist.

13. Haustierleine (20) nach Anspruch 11 oder 12, **dadurch gekennzeichnet, dass** die Haustierleine (20) an einem zweiten Ende (X2) der Leine (21) eine nicht öffenbare Schlinge bildet, dass der Teil der Leine, der die nicht öffenbare Schlinge bildet, durch den Ösenkörper (5) der Verstellvorrichtung (1) geführt ist, und/oder dass der Ösenkörper (5) der Verstellvorrichtung (1) so an der nicht öffenbaren Schlinge angeordnet ist, dass der Teil der Leine (21), der die nicht öffenbare Schlinge bildet, durch die dritte Durchführung (6) des Ösenkörpers (5) der Verstellvorrichtung (1) hindurchgeführt ist, um das zweite Ende (X2) der Leine (21) an der Verstellvorrichtung (1) zu befestigen.

14. Haustierleine (20) nach einem der Ansprüche 11 bis 13, **dadurch gekennzeichnet, dass** die Leine (21) von Seiten der zweiten Seitenfläche (S2) des Verstellvorrichtungskörpers (2) durch die erste Durchführung (3) in Richtung der ersten Seitenfläche (S1) und von Seiten der ersten Seitenfläche (S1) des Verstellvorrichtungskörpers (2) durch die zweite Durchführung (4) in Richtung der zweiten Seitenfläche (S2) geführt ist.

15. Leinenführungsset für ein Haustier, aufweisend ein Brustgeschirr oder ein Halsband für ein Haustier und eine Haustierleine (20) nach einem der vorangehenden Ansprüche 11 bis 14.
